# EUROPEAN PATENT APPLICATION

(11) **EP 2 723 126 A1**
(43) Date of publication of application: **23.04.2014**
(21) Application number: 13181993.0
(22) Date of filing: 28.08.2013
(51) Int. Cl.: H04W 48/18, H04W 4/22, H04W 76/00

(54) **Method and user equipment in a communications network**

(30) Priority: 04.10.2012 EP 12187208
(71) Applicant: ST-Ericsson SA, 1228 Genève Plan-les-Ouates (CH)
(72) Inventor: Xie, Jun, 212 19 Malmö (SE)
(74) Representative: Valea AB

(57) **Abstract**

A method in a user equipment for selecting a Public Land Mobile Network, PLMN, for an emergency service in a communications network. The communications network comprises a cell shared by multiple PLMNs. The user equipment requests an emergency service from a PLMN sharing the cell. The user equipment further receives from the communications network an indicator of any of a rejection or an acceptance for the requested emergency service. The user equipment further stores the indicator together with an identity of the PLMN from which the indicator was received. The user equipment further selects for the emergency service in the communications network a PLMN out of the multiple PLMNs sharing the cell, based at least in part on the stored identity of the PLMN and the stored indicator.

## Description

### TECHNICAL FIELD

Embodiments herein relate to a user equipment and to a method therein. In particular, embodiments herein relate to the selection of a Public Land Mobile Network (PLMN) for an emergency service in a communications network such as a shared communications network.

### BACKGROUND

User equipments such as wireless devices are enabled to communicate wirelessly in a radio communications system, sometimes also referred to as a radio communications network, a mobile communication system, a wireless communications network, a wireless communication system, a cellular radio system or a cellular system. The communication may be performed via a radio channel, e.g. between two wireless devices, between a wireless device and a regular telephone and/or between a wireless device and a server via a Radio Access Network (RAN) and possibly one or more core networks, comprised within the wireless communications network.

A cellular radio system covers a geographical area which is divided into cell areas, wherein each cell area is served by a network node such as a Base Station (BS), e.g. a Radio Base Station (RBS), which sometimes may be referred to as e.g. eNB, eNodeB, NodeB, or BTS (Base Transceiver Station), depending on the technology and terminology used. A cell is the geographical area where radio coverage is provided by the base station at a base station site.

Wireless devices are also known as e.g. user equipments, mobile terminals, wireless terminals and/or mobile stations, mobile telephones, cellular telephones, or laptops with wireless capability, just to mention some examples. The wireless devices in the present context may be, for example, portable, pocket-storable, hand-held, computer-comprised, or vehicle-mounted mobile devices, enabled to communicate voice and/or data with another entity.

In 3GPP release 9, the IP Multimedia Subsystem (IMS) emergency functionality was introduced. When a communication device, e.g. a User Equipment (UE), is camping on a cell in limited service mode, the user equipment may initiate an emergency attach procedure to obtain an emergency service. The communications network will indicate its support of IMS emergency service in the broadcast system information. In a shared network environment where one cell may belong to multiple Public Land Mobile Networks (PLMNs), the broadcast IMS emergency capability is indicated as supported as long as there is at least one PLMN that supports it. Therefore, if the user equipment happens to choose the PLMN which does not support the IMS emergency service, the emergency attach request will be rejected, and the user equipment may retry the request in other PLMNs in a trial-and-error way. This is for example described in the documents "3GPP TS24.301 chapter "5.5.1.2.5A Attach for emergency bearer services not accepted by the network" and 3GPP TS24.008 chapter "4.7.3.1.4a GPRS attach for emergency bearer services not accepted by the network (UTRAN lu mode only)".

### SUMMARY

An object of embodiments herein is to provide a way of improving the performance in a communications network.

A basic concept of some embodiments herein is that by keeping track of the history of rejections and acceptances for an emergency service in a shared communications network, the user equipment will experience reduced latency.

According to a first aspect of embodiments herein, the object is achieved by a method in a user equipment for selecting a Public Land Mobile Network, PLMN, for an emergency service in a communications network. The communications network comprises a cell shared by multiple PLMNs. The user equipment requests an emergency service from a PLMN sharing the cell. The user equipment further receives from the communications network an indicator of any of a rejection or an acceptance for the requested emergency service. The user equipment further stores the indicator together with an identity of the PLMN from which the indicator was received. The user equipment further selects for the emergency service in the communications network a PLMN out of the multiple PLMNs sharing the cell, based at least in part on the stored identity of the PLMN and the stored indicator.

According to a second aspect of embodiments herein, the object is achieved by a user equipment configured to select a Public Land Mobile Network, PLMN, for an emergency service in a communications network. The communications network is adapted to comprise a cell shared by multiple PLMNs. The user equipment comprises a requesting circuit configured to request an emergency service from a PLMN sharing the cell. The user equipment further comprises a receiving circuit configured to receive from the communications network an indicator of any of a rejection or an acceptance for the requested emergency service. The user equipment further comprises a storing circuit configured to store the indicator together with an identity of the PLMN from which the requested emergency service was rejected or accepted. The user equipment further comprises a selecting circuit configured to select for the emergency service in the communications network, a PLMN out of the multiple PLMNs sharing the cell, based at least in part on the stored identity of the PLMN and the stored indicator.

Since the user equipment selects, for the emergency service in the communications network, a PLMN out of the multiple PLMNs sharing the cell, based at least in part on the stored identity of the PLMN from which the indicator of any of a rejection or an acceptance was received and the stored indicator, the latency for receiving an acceptance for a later request for the same service in the communications network will be reduced.

An advantage of embodiments herein is that some unnecessary signalling from the user equipment towards the communications network may be avoided, due to the fact that user equipment knows beforehand that a certain PLMN and/or cell combination does not support the emergency service. This may be quite useful in case of emergency situations, such as in earth quake situations, when a lot of people may try to obtain the emergency service around the same time, which may, in a shared communications network environment, cause a congestion for the PLMNs that does not support the emergency service.

An advantage with some first embodiments is that the communication device, e.g. the user equipment, may avoid getting rejected repeatedly and thereby the latency may be reduced.

An advantage with some second embodiments is that the the user equipment, may immediately try to emergency attach on those PLMNs and/or cells from which the user equipment has obtained an emergency service earlier. Thereby the latency may be reduced.

### BRIEF DESCRIPTION OF THE DRAWINGS

Examples of embodiments herein are described in more detail with reference to attached drawings in which:
Figure 1 is a schematic block diagram illustrating a communications network;
Figure 2 is a flowchart depicting embodiments of a method in a user equipment;
Figure 3 is a schematic block diagram illustrating embodiments of a user equipment;
Figure 4 is a flowchart depicting some first embodiments of a method in a user equipment;
Figure 5 is a flowchart depicting some second embodiments of a method in a user equipment; and
Figure 6 is a flowchart depicting some third embodiments of a method in a user equipment.

### DETAILED DESCRIPTION

Embodiments herein will be exemplified in the following non-limiting description.

Embodiments herein relate to communication in a communications network. Especially, embodiments here relate to a communications device selecting a Public Land Mobile Network (PLMN) for an emergency service in the communications network, e.g. in a shared communications network.

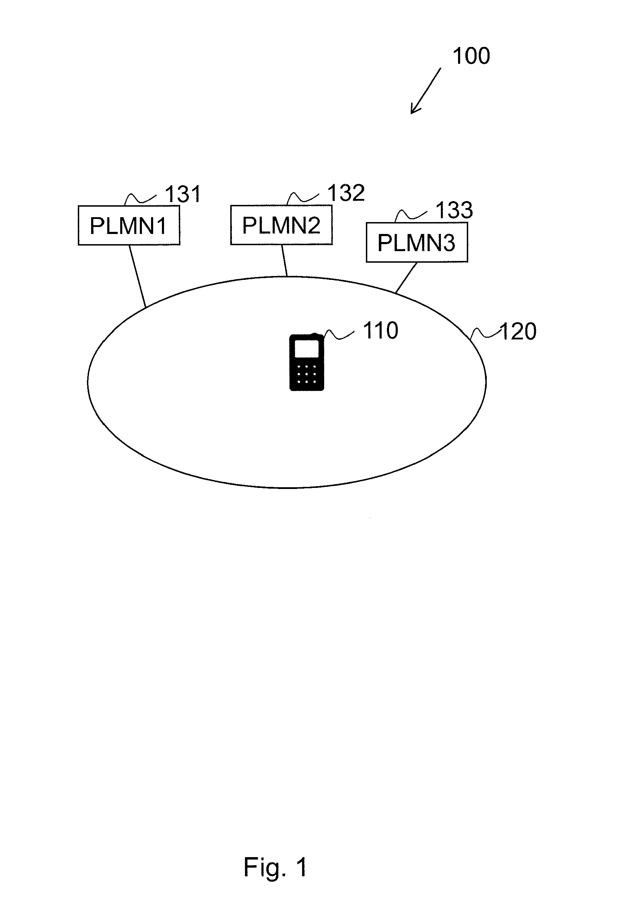

**Figure 1** depicts a communications network 100. The communications network 100 comprises a communications device, also referred to as **a user equipment 110,** camping on **a cell 120** shared by **a set of PLMNs 131, 132, 133.** The number of PLMNs that share the cell 120 may of course be more than three and the number of PLMNs may vary for other cells in the communications network 100, which other cells are not shown in Figure 1. The user equipment 110 may be e.g., a mobile terminal or a wireless terminal, a mobile phone, a computer such as e.g. a laptop, a tablet pc such as e.g. an iPad^{™}, a Personal Digital Assistant (PDA), or any other communications device capable to communicate in the communications network.

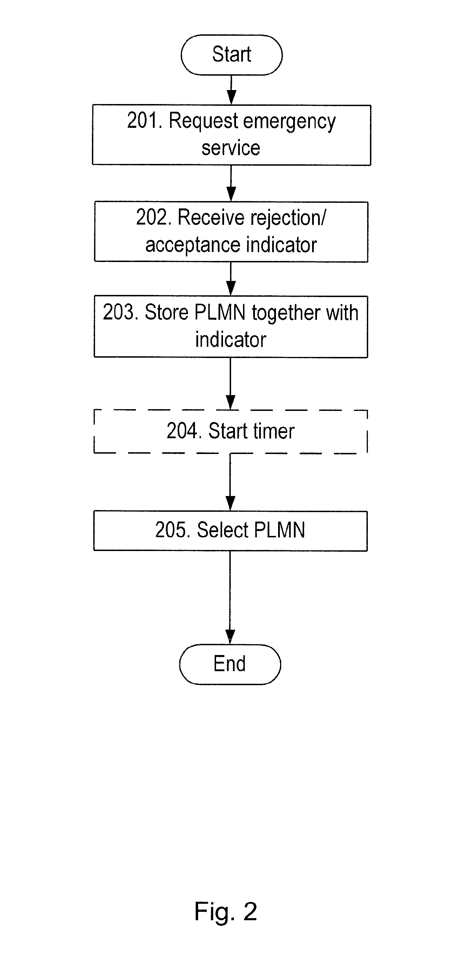

Examples of embodiments of a method in the user equipment 110 for selecting a PLMN 131, 132, 133 for an emergency service in a communications network 100 will now be described with reference to a schematic flowchart depicted in Figure 2. The method comprises the following actions, which actions may be taken in any suitable order. Dashed lines of some boxes in Figure 2 indicate that this action is not mandatory.

As mentioned above, the communications network 100 comprises the user equipment 110 camping on the cell 120 shared by the set of PLMNs 131, 132, 133.

### Action 201

As mentioned above the communications network 100 indicates its support of IMS emergency service for the cell 120 in the broadcast system information as long as there is at least one PLMN 131, 132, 133 that supports it. The user equipment 110 requests an emergency service from a PLMN 131, 132, 133 sharing the cell 120.

### Action 202

The user equipment 110 receives from the network 100 an indicator of any of a rejection or an acceptance for the requested emergency service. The indicator may for example be an Attach Reject or an Attach Accept message.

### Action 203

To be able to disregard the PLMNs 131, 132, 133 that has rejected the request for the emergency service and prioritize the PLMNs 131, 132, 133 that have accepted the request for the emergency service the user equipment 110 stores the indicator together with an identity of the PLMN 131, 132, 133 from which the indicator was received. The identity of the PLMN 131, 132, 133 may for example be a PLMN code.

In some embodiments the user equipment 110 stores a combination of the identity of the PLMN 131, 132, 133 from which the indicator was received and the identity of the cell 120 shared by the PLMN 131, 132, 133 from which the indicator was received.

The user equipment 110 may store the identity of the PLMN 131, 132, 132 or the combination of the identity of the PLMN 131, 132, 133 and the identity of the cell 120 in a rejection list when a request for an emergency service has been rejected from the network 100. The rejection list may have as its element the cell identity and/or the PLMN code and/or a combination thereof from which cell 120 and/or PLMN 131, 132, 133 an attachment accept, referred to as Attach Accept, for the emergency service was received if the cell belongs to different PLMNs 131, 132, 133. The rejection list may be initialized to empty as a factory setting. As the user equipment 110 is powered on, or as a modem comprised in the user equipment is powered on, it may comprise some PLMN/cell elements stored as previous rejection before powering off.

The user equipment 110 may store the identity of the PLMN 131, 132, 133 or the combination of the identity of the PLMN 131, 132, 133 and the identity of the cell 120 in an acceptance list when a request for an emergency service has been accepted from the communications network 100. The acceptance list may have as its element the cell identity and/or the PLMN code and/or a combination thereof from which cell 120 and/or PLMN 131, 132, 133 an attachment accept (Attach Accept) for the emergency service was received if the cell 120 belongs to different PLMNs. The acceptance list may be initialized to empty as a factory setting. As the user equipment 110 is powered on, or as the modem comprised in the user equipment is powered on, it may comprise some PLMN/cell elements stored as previous rejection before powering off.

In some embodiments the user equipment 110 may have the rejection list and the acceptance list. The rejection list may have as its element the cell identity and/or the PLMN code and/or a combination thereof from which cell 120 and/or PLMN 131, 132, 133 the Attach Reject for the emergency service was received if the cell 120 belongs to different PLMNs 131, 132, 133. Further, the acceptance list may have as its elements the cell identity and/or the PLMN code and/or a combination thereof from which cell 120 and/or PLMN 131, 132, 133 the Attach Accept for the emergency service was received if the cell 120 belongs to different PLMNs 131, 132, 133.

The user equipment 110 may store the indicator together with the identity of the PLMN 131, 132, 133, or together with the combination of the identity of the PLMN 131, 132, 133 and the identity of the cell 120 during a specific period of time. After the specific period of time the stored identity may no longer be valid. In this way the user equipment 110 may adapt itself to changes in the communications network 100. For example, a PLMN 131, 132, 133 that earlier has rejected the requested emergency service may later accept the same service.

In some embodiments the rejection list is valid during a first specific period of time and the acceptance list is valid during a second specific period of time.

The period of time may be configurable. Further, the period of time for the two lists may be the same, but it should be understood that the period of time for the two lists may be different. For example, the specific period of time for the stored identity of the PLMN 131, 132, 133 that has rejected the request for an emergency service may be set to a relatively short period, e.g. 24 h, in order not to store for a too long period of time the identity of the PLMN 131, 132, 133 that has rejected the request for the emergency service but later may accept the emergency service. The specific period of time for the stored the identity of the PLMN 131, 132, 133 that has accepted the request for an emergency service may be set to a relatively long period, e.g. 1 month, since it is not likely that a PLMN 131, 132, 133 that has accepted the request for the emergency service earlier would suddenly stop doing that.

It should be understood that the rejection list and the acceptance list mentioned above do not have to be two separate lists. In some embodiments, the information comprised in the two lists is comprised in one information carrying entity.

The rejection list and the acceptance list may be stored on a non-volatile memory and/or on a volatile memory.

In this description, reference is made to a "list", however it should be understood that it does not have to be a list but it may be a set, composition, structure, etc. or any other kind of information carrying entity configured to comprise information about the cell 120 and/or the PLMN 131, 132, 133.

### Action 204

The user equipment 110 may start a timer related to the specific period of time mentioned above in action 203. Obviously the timer is started as soon as the indicator and the identity of the PLMN 131, 132, 133, or the indicator and the combination of the identity of the PLMN 131, 132, 133 and the identity of the cell 120 have been stored. If the same PLMN 131, 132, 133 rejects the emergency service again before the expiration of the timer, then the timer may be restarted.

In some embodiments the user equipment 110 starts a first timer related to the first specific period of time when the identity of the PLMN 131, 132, 133 has been stored in the rejection list.

In some other embodiments the user equipment 110 starts a second timer related to the second specific period of time when the identity of the PLMN 131, 132, 133 has been stored in the acceptance list.

In some embodiments the user equipment 110 empties the rejection list when the first timer expires, and the user equipment 110 empties the acceptance list when the second timer has expired.

If the user equipment 110, or the modem comprised in the user equipment 110, is powered off while this timer is still running, it is possible to store the remaining seconds before expiry into non-volatile memory and continue to run the timer after next power on.

### Action 205

The user equipment 110 selects for the emergency service in the communications network 100, a PLMN 131, 132, 133 out of the multiple PLMNs 131, 132, 133 sharing the cell 120. The selection is based at least in part on the identity of the PLMN 131, 132, 133 and the indicator which were received in action 202 and stored in action 203 above.

In some embodiments the user equipment 110 disregards during the selecting the stored identity of the PLMN 131, 132, 133 from which the rejection for the requested emergency service was received. For example, each time the user equipment 110 receives an Attach Reject for the emergency service and it chooses to retry on one or more other PLMNs 131, 132, 133, it may skip all PLMNs 131, 132, 133 that are comprised in the rejection list. Thereby, the latency may be reduced, since the user equipment may spend less time on requesting the emergency service from PLMNs 131, 132, 133 that do not support the emergency service.

Further the user equipment 110 may down-prioritize during the selecting the stored identity of the PLMN 131, 132, 133 from which the rejection for the requested emergency service was received. For example, each time the user equipment 110 receives an Attach Reject for the emergency service and it chooses to retry on one or more other PLMNs 131, 132, 133, the user equipment 110 may try the PLMNs 131, 132, 133 from which the rejection for the requested emergency service was received after it has tried all the PLMNs 131, 132, 133 from which a rejection for the requested emergency service has not been received. In this case, if the user receives an acceptance for the requested emergency service to a PLMN 131, 132, 133 which is still in the rejection list, then the selected PLMN 131, 132, 133 is removed from the rejection list before the end of the timer and the timer is deleted.

In some other embodiments the user equipment 110 prioritizes during the selecting the stored identity of the PLMN 131, 132, 133 from which an acceptance for an emergency service was received. For example, each time the user equipment 110 receives an Attach Reject for the emergency service and it chooses to retry on other PLMNs 131, 132, 133, it may prioritize those PLMNs that are comprised in the acceptance list. Thereby, the latency may be reduced.

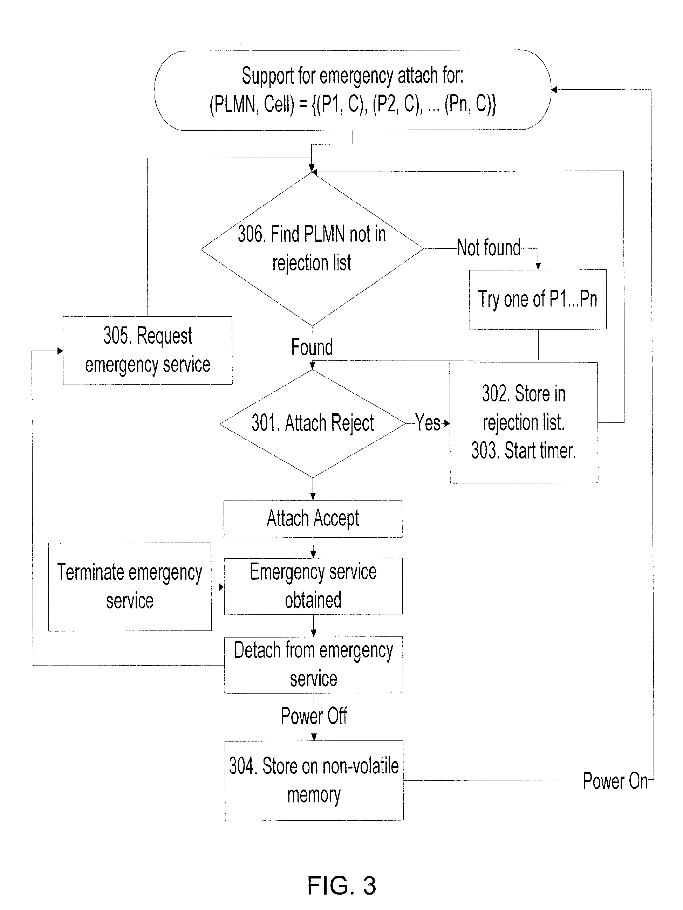

Some first embodiments will now be described with reference to **Figure 3** which is a schematic flow chart illustrating method actions of some first embodiments. The UE 110 is camping on a cell 120 shared by multiple PLMNs 131, 132, 133 for limited service and the cell 120 indicates in the broadcast system information that it supports emergency attach for a set of PLMNs 131, 132, 133: (PLMN, Cell) = {(P1, C), (P2, C), ... (Pn, C)}.

In some first embodiments, the user equipment 110 may have a rejection list which has as its element a cell identity (cell id) and/or a PLMN code and/or a combination thereof from which cell 120 and/or PLMN 131, 132, 133 an attach rejection (Attach Reject) for an emergency service was received 301. The rejection list may be considered valid during a period of time T. The period of time T may be configurable. Further, the rejection list may be stored 302 on a non-volatile memory and/or on a volatile memory. The rejection list is initialized to empty as a factory setting and as the modem is powered on the rejection list may contain some PLMN/cell elements stored as previous rejection before powering off. A rejection list timer is started 303 when the cell identity and/or the PLMN code and/or the combination thereof has been stored in the rejection list. When the timer expires, the list may be reset to empty. When the modem is powered off while the timer is still running, the user equipment 110 may store 304 the remaining seconds before expiry into non-volatile memory and continue to run the timer after next power on. Each time when the user equipment 110 receives an Attach Reject for the emergency service and it chooses to retry 305 on one or more other PLMNs 131, 132, 133, it may skip 306 those PLMNs 131, 132, 133 that are comprised in the rejection list, and thereby reducing the latency.

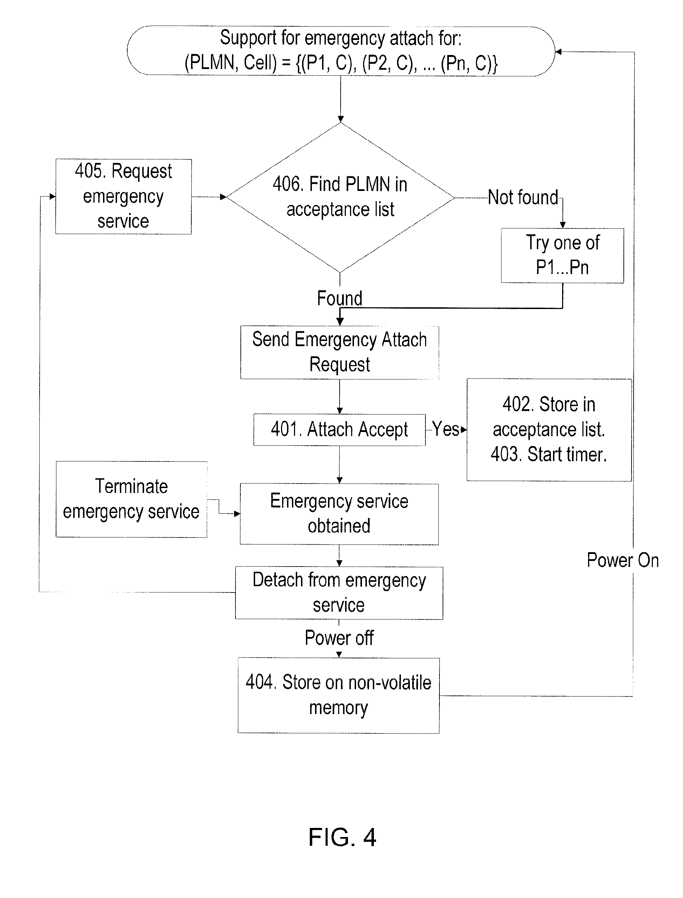

Some second embodiments will now be described with reference to **Figure 4****,** which is a schematic flow chart illustrating method actions of some second embodiments. The UE 110 is camping on a cell 120 shared by multiple PLMNs 131, 132, 133 for limited service and the cell 120 indicates in the broadcast system information that it supports emergency attach for a set of PLMNs 131, 132, 133: (PLMN, Cell) = {(P1, C), (P2, C), ... (Pn, C)}.

In some second embodiments, the user equipment 110 may have an acceptance list which has as its element the cell identity and/or the PLMN code and/or a combination thereof from which cell 120 and/or PLMN 131, 132, 133 an attachment accept (Attach Accept) 401 for the emergency service was received if the cell 120 belongs to different PLMNs 131, 132, 133. The acceptance list may be considered valid during a period of time T. The period of time T may be configurable. Further, the acceptance list may be stored 402 on a non-volatile memory and/or on a volatile memory. The acceptance list is initialized to empty as a factory setting and as the modem is powered on the acceptance list may contain some PLMN/cell elements stored as previous acceptance before powering off. An acceptance list timer is started 403 when the cell identity and/or the PLMN code and/or the combination thereof has been stored in the acceptance list. When the timer expires, the list may be reset to empty. When the modem is powered off while the timer is still running, the user equipment 110 may store 404 the remaining seconds before expiry into non-volatile memory and continue to run the timer after next power on. Each time the user equipment 110 receives an Attach Reject for emergency service and it chooses to retry 405 on other PLMNs 131, 132, 133, it may prioritize 406 those PLMNs 131, 132, 133 that are comprised in the acceptance list. Thereby, the latency is reduced.

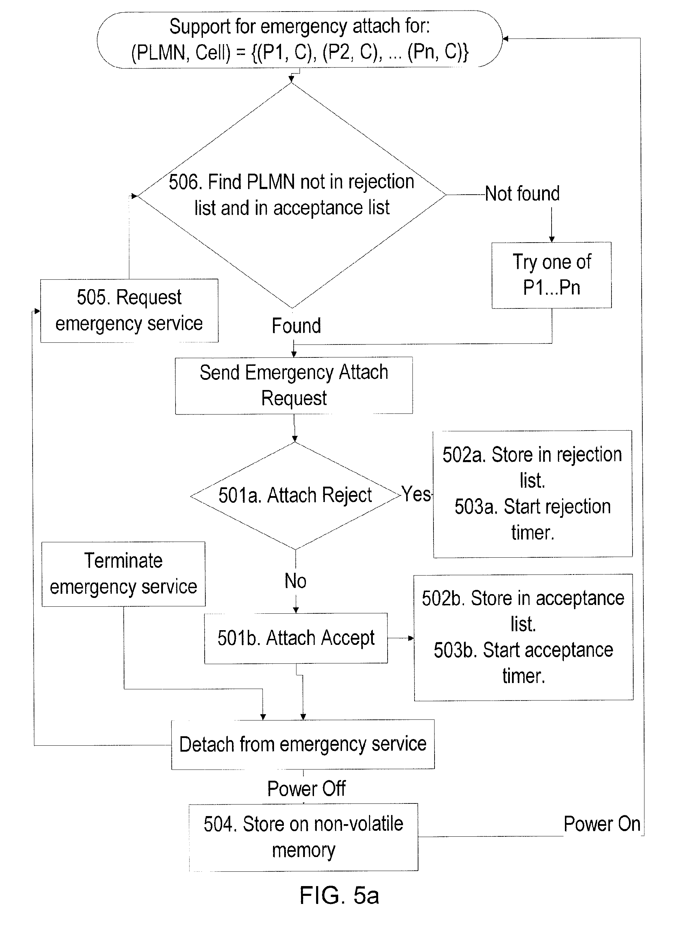

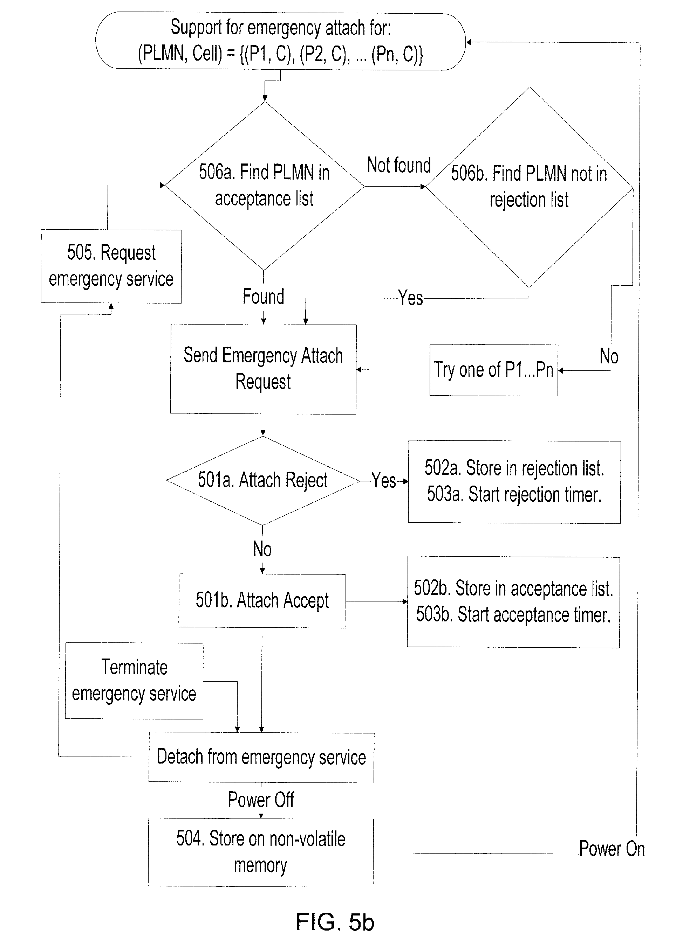

Some third embodiments will now be described with reference to **Figure 5a** and **Figure 5b****,** which are schematic flow charts illustrating method actions of some third embodiments. The UE 110 is camping on a cell 120 shared by multiple PLMNs 131, 132, 133 for limited service and the cell indicates in the broadcast system information that it supports emergency attach for a set of PLMNs: (PLMN, Cell) = {(P1, C), (P2, C), ... (Pn, C)}.

In some third embodiments, the user equipment 110 may have a rejection list and an acceptance list. The rejection list may have as its element the cell identity and/or the PLMN code and/or a combination thereof from which cell 120 and/or PLMN 131, 132, 133 the Attach Reject 501a for the emergency service was received if the cell 120 belongs to different PLMNs 131, 132, 133. Further, the acceptance list may have as its elements the cell identity and/or the PLMN code and/or a combination thereof from which the Attach Accept 501b for the emergency service was received if the cell 120 belongs to different PLMNs 131, 132, 133. The rejection and acceptance lists are initialized to empty as a factory setting. The two lists may be considered valid during a period of time T. The period of time T may be configurable. A rejection list timer is started 503a when the identity of the cell identity and/or the PLMN code and/or a combination thereof has been stored in the rejection list. An acceptance list timer is started 503b when the cell identity and/or the PLMN code and/or a combination thereof have been stored in the acceptance list. When the respective timer expires, the respective list should be reset to empty. When the modem is powered off while the respective timer is still running, the user equipment 110 may store the remaining seconds before expiry into non-volatile memory and continue to run the respective timer after next power on. Further, as mentioned above in action 203, the period of time T for the two lists may be the same, but it should be understood that the period of time for the two lists may be different. The rejection list and the acceptance list may be stored on a non-volatile memory and/or on a volatile memory. Each time the user equipment 110 receives an Attach Reject for the emergency service and it chooses to retry 505 on one or more other PLMNs 131, 132, 133, it may prioritize 506, 506a those PLMNs 131, 132, 133 that are comprised in the acceptance list and skip 506, 506b all PLMNs 131, 132, 133 that are comprised in the rejection list . Thereby, the latency is reduced. In Figure 5b action 506 of Figure 5a is split into two actions 506a and 506b to exemplify an implementation of action 506.

Some third embodiments are a combination of some first and second embodiments and thus have the combined advantage of them. A scenario where reduced latency is very important is when the user equipment 110 is configured to have an always-on emergency service, then a rejection and/or acceptance list or similar may be used to prioritize the selection of PLMNs and/or cells from which the user equipment has obtained emergency service.

As mentioned above in action 204, if the user equipment 110, or the modem comprised in the user equipment 110, is powered off while this timer is still running, it is possible to store the remaining seconds before expiry into non-volatile memory and continue to run the timer after next power on.

Embodiments herein do also relate to a communications device, e.g. a user equipment, for selecting a PLMN for an emergency service in a communications network, e.g. in a shared communications network. Thus, embodiments herein do relate to a communications device, e.g. a user equipment, for realising one or more of the actions described above.

Embodiments herein do also relate to an integrated circuit comprising circuitry for performing one or more of the method actions described above, and to a communication device comprising the integrated circuit.

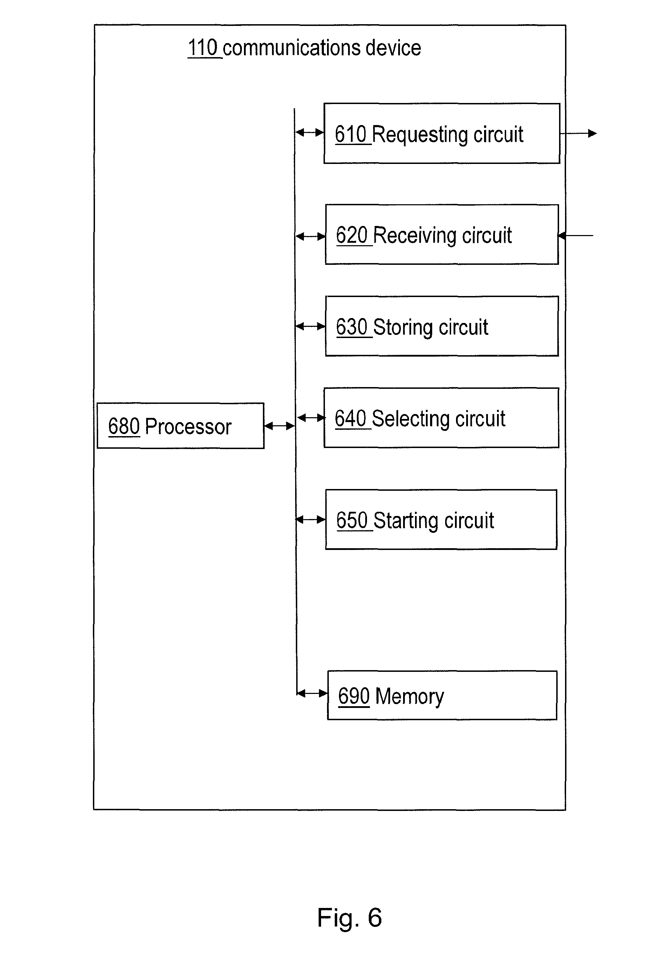

To perform the method actions for selecting a PLMN 131, 132, 133 for the emergency service in the communications network 100 described above in relation to Figure 2, the user equipment 110 comprises the following arrangement depicted in **Figure 6****.** The user equipment 110 is configured to select a PLMN 131, 132, 133 for an emergency service in the communications network 100, which communications network 100 is adapted to comprise the cell 120 shared by the multiple PLMNs 131, 132, 133.

The user equipment 110 comprises a **requesting circuit 610** configured to request an emergency service from a PLMN 131, 132, 133 sharing the cell 120.

The user equipment 110 further comprises **a receiving circuit 620** configured to receive from the communications network 100 an indicator of any of a rejection or an acceptance for the requested emergency service.

The user equipment 110 further comprises **a storing circuit 630** configured to store the indicator together with an identity of the PLMN 131, 132, 133 from which the requested emergency service was rejected or accepted.

The storing circuit 630 may further be configured to store the indicator together with a combination of the identity of the PLMN 131, 132, 133 from which the indicator was received and the identity of the cell 120 shared by the PLMN 131, 132, 133 from which the indicator was received.

In some embodiments the storing circuit 630 further is configured to store the identity of the PLMN 131, 132, 133 or the combination of the identity of the PLMN 131, 132, 133 and the identity of the cell 120 in a rejection list when a request for an emergency service was rejected from the communications network 100.

In some other embodiments the storing circuit 630 further is configured to store the identity of the PLMN 131, 132, 133 or the combination of the identity of the PLMN 131, 132, 133 and the identity of the cell 120 in an acceptance list when a request for an emergency service was accepted from the communications network 100.

The storing circuit 630 may further be configured to store the indicator together with the identity of the PLMN 131, 132, 133, or with the combination of the identity of the PLMN 131, 132, 133 and the identity of the cell 120, during a specific period of time.

In some embodiments the rejection list is valid during a first specific period of time and the acceptance list is valid during a second specific period of time.

The user equipment 110 further comprises **a selecting circuit 640** configured to select for the emergency service in the communications network 100, a PLMN 131, 132, 133 out of the multiple PLMNs 131, 132, 133 sharing the cell 120, based at least in part on the stored identity of the PLMN 131, 132, 133 from which the indicator was received and the stored indicator.

In some embodiments the selecting circuit 640 further is configured to **during selecting** a PLMN 131, 132, 133 for the emergency service, disregard the stored identity of the PLMN 131, 132, 133 from which a rejection for an emergency service has been received.

In some other embodiments the selecting circuit 640 further is configured to **during selecting** a PLMN 131, 132, 133 for the emergency service, prioritize the stored identity of the PLMN 131, 132, 133 from which an acceptance for an emergency service has been received.

The user equipment 110 may further comprise **a starting circuit 650** configured to start a timer related to the specific period of time mentioned above.

In some embodiments the starting circuit 650 further is configured to start a first timer related to the first specific period of time when the identity of the PLMN 131, 132, 133 has been stored in the rejection list, and to start a second timer related to the second specific period of time, when the identity of the PLMN 131, 132, 133 has been stored in the acceptance list.

In some embodiments the user equipment 110 is configured to empty the rejection list when the first timer expires, and to empty the acceptance list when the second timer has expired.

The user equipment 110 may be configured to store the remaining seconds before expiry of the timer into non-volatile memory when the user equipment 110, or the modem comprised in the user equipment 110, is powered off and continue to run the timer after next power on.

The embodiments herein for selecting a PLMN 131, 132, 133 for an emergency service in a communications network 100 may be implemented through one or more processors, such as a **processor 690** in the user equipment 110 depicted in Figure 3, together with computer program code for performing the functions and actions of the embodiments herein. The program code mentioned above may also be provided as a computer program product, for instance in the form of a data carrier carrying computer program code for performing the embodiments herein when being loaded into the processor 690 in the user equipment 110. One such carrier may be in the form of a solid-state memory, such as a flash memory or a Read-Only Memory (ROM).The computer program code may furthermore be provided as pure program code on a server and downloaded to the user equipment 110.

The user equipment 110 may further comprise a **memory 395** comprising one or more memory units. The memory 395 is arranged to store for example the indication with the identity of the PLMN 131, 132, 133 or the combination of the identity of the PLMN 131, 132, 133 and the identity of the cell 120. The memory 395 may also store configurations, the specific period of time during which the indication, the identity of the PLMN 131, 132, 133 or the combination of the identity of the PLMN 131, 132, 133 and the identity of the cell 120 are stored and applications to perform the methods herein when being executed in the user equipment 110.

Those skilled in the art will also appreciate that the requesting circuit 610, receiving circuit 620, storing circuit 630, selecting circuit 640 and starting circuit 650 described above may refer to a combination of analog and digital circuits, and/or one or more processors configured with software and/or firmware, e.g. stored in a memory, that when executed by the one or more processors such as the processor 690 perform as described above. One or more of these processors, as well as the other digital hardware, may be included in a single application-specific integrated circuitry (ASIC), or several processors and various digital hardware may be distributed among several separate components, whether individually packaged or assembled into a system-on-a-chip (SoC).

Further, in the previous description specific details have been set forth, such as particular embodiments for purposes of explanation and not limitation. However, it will be appreciated by one skilled in the art that other embodiments may be employed apart from these specific details. In some instances, detailed descriptions of well-known methods, nodes, interfaces, circuits, and devices are omitted so as not to obscure the description with unnecessary detail. Those skilled in the art will appreciate that the functions described may be implemented in one or more nodes, e.g. a communications device, using hardware circuitry, e.g., analog and/or discrete logic gates interconnected to perform a specialized function, ASICs, PLAs, etc., and/or using software programs and data in conjunction with one or more digital microprocessors or general purpose computers. Nodes that communicate using the air interface also have suitable radio communications circuitry. Moreover, the technology may additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware, e.g., digital or analog circuitry including but not limited to Application Specific Integrated Circuit(s) (ASIC) and/or Field Programmable Gate Array(s) (FPGA(s)), and where appropriate state machines capable of performing such functions.

In terms of computer implementation, a computer is generally understood to comprise one or more processors or one or more controllers, and the terms computer, processor, and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

Although the description above contains many specifics, they should not be construed as limiting but as merely providing illustrations of some presently preferred embodiments. The technology fully encompasses other embodiments which may become apparent to those skilled in the art. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for a device or method to address each and every problem sought to be solved by the described technology for it to be encompassed hereby.

When using the word "comprise" or "comprising" it shall be interpreted as non-limiting, in the meaning of consist at least of.

When using the word action/actions it shall be interpreted broadly and not to imply that the actions have to be carried out in the order mentioned. Instead, the actions may be carried out in any suitable order other than the order mentioned. Further, some action/actions may be optional.

The embodiments herein are not limited to the above described examples. Various alternatives, modifications and equivalents may be used. Therefore, the above embodiments should not be taken as limiting the scope of the invention, which is defined by the appending claims.

## Claims

1. A method in a user equipment (110) for selecting a Public Land Mobile Network, PLMN, (131, 132, 133) for an emergency service in a communications network (100), which communications network (100) comprises a cell (120) shared by multiple PLMNs (131, 132, 133), the method comprising:
*requesting (201,305, 405, 505)* an emergency service from a PLMN (131) sharing the cell (120),
*receiving (202, 301, 401, 501a, 501b)* from the communications network (100) an indicator of any of a rejection or an acceptance for the requested emergency service,
*storing (203, 302, 304, 402,404, 502a, 502b, 504)* the indicator together with an identity of the PLMN (131) from which the indicator was received, and
*selecting* (205) for the emergency service in the communications network (100), a PLMN (131, 132, 133) out of the multiple PLMNs (131, 132, 133) sharing the cell (120), based at least in part on the stored identity of the PLMN (131) from which the indicator was received and the stored indicator.

2. The method according to claim 1, wherein the storing (203, 302, 304, 402, 404, 502a, 502b, 504) comprises storing the indicator together with a combination of the identity of the PLMN (131) from which the indicator was received and the identity of the cell (120) shared by the PLMN (131) from which the indicator was received.

3. The method according to claim 1 or 2, wherein the storing (203, 302, 304, 402, 404, 502a, 502b, 504) comprises storing the identity of the PLMN (131) or the combination of the identity of the PLMN (131) and the identity of the cell (120) in a rejection list when a request for an emergency service has been rejected from the communications network (100).

4. The method according to any of the claims 1-3, wherein the storing (203, 302, 304, 402, 404, 502a, 502b, 504) comprises storing the identity of the PLMN (131) or the combination of the identity of the PLMN (131) and the identity of the cell (120) in an acceptance list when a request for an emergency service has been accepted from the communications network (100).

5. The method according to any of the claims 1-4, wherein the *selecting* (205) a PLMN (131, 132, 133) out of the multiple PLMNs (131, 132, 133) sharing the cell (120) comprises:
during the selecting (205) disregarding the stored identity of the PLMN (131) from which the rejection for the requested emergency service was received.

6. The method according to any of the claims 1-5, wherein the *selecting* (205) a PLMN out of the multiple PLMNs (131, 132, 133) sharing the cell (120) comprises:
during the selecting (205) prioritizing the stored identity of the PLMN (131, 132, 133) from which an acceptance for an emergency service was received.

7. The method according to any of the claims 4-6, wherein the storing (203, 302, 304, 402, 404, 502a, 502b, 504) comprises storing during a specific period of time the indicator together with:
the identity of the PLMN (131), or with
the combination of the identity of the PLMN (131) and the identity of the cell (120),
and wherein the method further comprises:
*starting* (204) a timer related to the specific period of time.

8. The method according to any of the claims 4-7, wherein the rejection list is valid during a first specific period of time and the acceptance list is valid during a second specific period of time, further comprising:
*starting* (204) a first timer related to the first specific period of time when the identity of the PLMN (131, 132, 133) has been stored in the rejection list, and
*starting* (204) a second timer related to the second specific period of time when the identity of the PLMN (131, 132, 133) has been stored in the acceptance list.

9. A user equipment (110) configured to select a Public Land Mobile Network, PLMN, (131, 132, 133) for an emergency service in a communications network (100), which communications network (100) is adapted to comprise a cell (120) shared by multiple PLMNs (131, 132, 133), the user equipment (110) comprises:
a requesting circuit (610) configured to request an emergency service from a PLMN (131, 132, 133) sharing the cell (120),
a receiving circuit (620) configured to receive from the communications network (100) an indicator of any of a rejection or an acceptance for the requested emergency service,
a storing circuit (630) configured to store the indicator together with an identity of the PLMN (131) from which the requested emergency service was rejected or accepted, and
a selecting circuit (640) configured to select for the emergency service in the communications network (100), a PLMN (131, 132, 133) out of the multiple PLMNs (131, 132, 133) sharing the cell (120), based at least in part on the stored identity of the PLMN (131) from which the indicator was received and the stored indicator.

10. The user equipment (110) according to claim 9, wherein the storing circuit (630) further is configured to store the indicator together with a combination of the identity of the PLMN (131) from which the indicator was received and the identity of the cell (120) shared by the PLMN (131) from which the indicator was received.

11. The user equipment (110) according to claim 9 or 10, wherein the storing circuit (630) further is configured to store the identity of the PLMN (131) or the combination of the identity of the PLMN (131) and the identity of the cell (120) in a rejection list when a request for an emergency service was rejected from the communications network (100).

12. The user equipment (110) according to any of the claims 9-11, wherein the storing circuit (630) further is configured to store the identity of the PLMN (131) or the combination of the identity of the PLMN (131) and the identity of the cell (120) in an acceptance list when a request for an emergency service was accepted from the communications network (100).

13. The user equipment (110) according to any of the claims 9-12, wherein the selecting circuit (640) further is configured to disregard during the selecting the stored identity of the PLMN (131) from which a rejection for an emergency service has been received.

14. The user equipment (110) according to any of the claims 9-13, wherein the selecting circuit (640) further is configured to prioritize *during the selecting* the stored identity of the PLMN (131) from which an acceptance for an emergency service has been received.

15. The user equipment (110) according to any of the claims 12-14, wherein the storing circuit (630) further is configured to store during a specific period of time the indicator together with:
the identity of the PLMN (131), or with
the combination of the identity of the PLMN (131) and the identity of the cell (120),
and the user equipment (110) further comprises a starting circuit (650) configured to start a timer related to the specific period of time.

16. The user equipment (110) according to any of the claims 12-15, wherein the rejection list is valid during a first specific period of time and the acceptance list is valid during a second specific period of time, and the starting circuit (650) further is configured to:
start a first timer related to the first specific period of time when the identity of the PLMN (131) has been stored in the rejection list, and
start a second timer related to the second specific period of time, when the identity of the PLMN (132) has been stored in the acceptance list.
